# EUROPÄISCHE PATENTSCHRIFT

(11) **EP 2 951 609 B1**
(45) Veröffentlichungstag und Bekanntmachung des Hinweises auf die Patenterteilung: **01.05.2019**
(21) Anmeldenummer: 14711705.5
(22) Anmeldetag: 06.03.2014
(51) Int. Cl.: G01S 5/02

(54) **VERFAHREN ZUR ORTSBESTIMMUNG EINES MOBILEN GERÄTES INNERHALB EINES GEBÄUDES SOWIE VORRICHTUNGEN ZUR DURCHFÜHRUNG DESSELBEN**
METHOD FOR LOCATING THE POSITION OF A MOBILE DEVICE WITHIN A BUILDING AND DEVICES FOR PERFORMING SAID METHOD
PROCÉDÉ DE LOCALISATION D'UN APPAREIL MOBILE À L'INTÉRIEUR D'UN BÂTIMENT ET DISPOSITIFS POUR SA MISE EN OEUVRE

(30) Priorität: 28.03.2013 DE 102013205547
(43) Veröffentlichungstag der Anmeldung: 09.12.2015
(73) Patentinhaber: Siemens Aktiengesellschaft, 80333 München (DE)
(72) Erfinder: MACWILLIAMS, Asa, 82256 Fürstenfeldbruck (DE); SCHINDHELM, Corina Kim, 81539 München (DE)
(86) Internationale Anmeldenummer: PCT/EP2014/054298
(87) Internationale Veröffentlichungsnummer: WO 2014/154459

(56) Entgegenhaltungen:
- DE-A1-102011 006 180
- US-A1- 2008 130 604
- US-A1- 2013 317 944

## Beschreibung

Die Erfindung betrifft ein Verfahren zur Ortsbestimmung eines mobilen Gerätes innerhalb eines Gebäudes, bei dem das mobile Gerät Positionsinformationen von Raumgeräten erhält.

Bekannt sind in Räumen installierte Ortsbarken, die eine ID eines Raumes übermitteln, etwa RFID Tags, kleine Bluetooth-oder Infrarot-Sender, QR Codes o. ä. In allen diesen Fällen muss hier jedoch ein mobiles Gerät eine Lese- oder Empfangseinheit aufweisen, um diese Ortsbarken zu erkennen.

Weiterhin ist die terminalbasierte Funk-Positionierung, z.B. mittels WiFi, bekannt. Hierzu verfügt das mobile Gerät eine Karte mit Feldstärken und Positionen von Funksendern, z.B. WiFi Access Points, und es errechnet dann aus aktuell gemessenen Feldstärken eine wahrscheinliche Position. Dieses Verfahren ist jedoch recht rechenintensiv und braucht möglichst aktuelle Feldstärke-Karten.

Ebenfalls auf derselben Technologie basierend aber weiter verbreitet ist eine serverbasierte Funk-Positionierung, auch z.B. mittels WiFi. Hierbei wird allerdings die Positionierungsberechnung von einem Server durchgeführt, was für die Privatsphäre des Benutzers des mobilen Geräts problematisch ist.

Ein weiteres bekanntes Verfahren auf mobilen Geräten setzt Kompasse, Inertialsensoren und Gyroskope ein, um
die Bewegung und Orientierung des mobilen Gerätes aufzuzeichnen und daraus eine Position zu errechnen.
Dieses Verfahren ist allein für sich genommen meist zu ungenau und wird deshalb oft mit anderen Verfahren kombiniert.

Aus der deutschen Patentanmeldung DE 10 2011 006 180 A1 ist ein Verfahren zum Lokalisieren eines Endgeräts mittels einer Lokalisierungseinrichtung bekannt, die dazu ausgestaltet ist, das Endgerät mithilfe von in dem Endgerät empfangenen Funksignalen von Funkzugangspunkten zu lokalisieren. Bei dem Verfahren wird eine Aktivierung der Lokalisierung anhand der Funksignale in Abhängigkeit von einer Auswertung von in einer Umgebung des Endgeräts mittels wenigstens einer Empfangseinrichtung erfassten Funksignalen wenigstens eines Funkzugangspunkts und/oder in Abhängigkeit von Angaben über Aufstellungsorte von Funkzugangspunkten gesteuert.

Aus der US-Patentanmeldung US 2008/130604 A1 ist ein WLAN mit mehreren Zugangspunkten bekannt, bei dem eine erste Menge von Zugangspunkten Wifi-Zugänge sind, die die Signalstärke messen und die erhaltene Empfangsstärke (RSSI) bestimmen und eine zweite Menge von Zugangspunkten die entsprechend der Ankunftszeit (TOA) des Standards RTLS betreibar sind, bei dem eine dual-mode Mobilstation vorhanden ist, die sowohl mit dem Wifi- als auch mit dem RTLS-Zugangspunkt betreibbar ist, und bei dem Ortsbestimmungs-Prozessor operativ mit der ersten Menge von Stationen in Verbindung ist und eine RSSI-Ortsbestimmungskarte erzeugt und mit der zweiten Menge von Stationen und durch die Bestimmmung der zu erst ankommenden Signale die Lage der Mobilstation und die Lage aller nicht dual-mode Wifi-Geräte bestimmt wird.

Aus der veröffentlichten Patentschrift US 2013/0317944 ist ein Verfahren bekannt, welches die Messungen des Beschleunigungssensors im Endgerät zusammen mit den empfangenen Funksignalen der Funkzugangspunkten verwendet, um die Position des Endgerätes zu ermitteln, ohne dass dabei die Position der jeweiligen Funkzugangspunkte gesendet werden.

Die der Erfindung zu Grunde liegende Aufgabe besteht nun darin, ein Verfahren zur Ortsbestimmung eines mobilen Gerätes, bspw. eines Smartphones, anzugeben, bei dem mit möglichst geringem Zusatzaufwand innerhalb eines Gebäudes die Position des mobilen Gerätes bzw. seines Benutzers raumgenau und möglichst abhörsicher, also ohne fremde Überwachbarkeit der Benutzerposition, bestimmbar ist.

Diese Aufgabe wird durch die Merkmale des Patentanspruchs 1 erfindungsgemäß gelöst. Die weiteren Ansprüche betreffen bevorzugte Ausgestaltungen des erfindungsgemäßen Verfahrens sowie eine Vorrichtungen zur Durchführung desselben.

Die Erfindung betrifft im Wesentlichen ein Verfahren zur Ortsbestimmung eines mobilen Gerätes innerhalb eines Gebäudes, bei dem ein inertialer Bewegungssensor eines mobilen Geräts und ein optischer Bewegungsmelder eines in einem Raum installierten Raumgeräts eine Bewegung in dem Raum erkennen, bei dem das jeweilige Raumgerät eine Funkmeldung mit seiner eigenen Position sendet und das jeweilige mobile Gerät diese Funkmeldung empfängt und dabei deren Signalstärke misst, und bei dem das mobile Geräts erkennt, wenn die Signalstärke des soeben empfangenen Funkmeldung hoch ist, und wenn die durch den Bewegungsmelder festgestellte Bewegung mit der durch den Bewegungssensors festgestellten Bewegung zeitlich korreliert sind, und daraus folgert, dass die eben in dem mindestens einen Raum gemeldete Bewegung wahrscheinlich seine eigene ist und dass sich das mobile Gerät in dem Raum bzw. in der Nähe der Position des Raumgeräts befindet. Die Erfindung zeichnet sich insbesondere dadurch aus, dass die Identität des betreffenden mobilen Gerätes geschützt ist und dass keine weiteren Server o. ä. zur Positionierung benötigt werden, zu denen das mobile Gerät seine Identität, Position oder Sensorinformationen offenbaren müsste.

Die Erfindung zeichnet sich insbesondere dadurch aus, dass die Identität des betreffenden mobilen Gerätes geschützt ist und dass keine weiteren Server o. ä. zur Positionierung benötigt werden, zu denen das mobile Gerät seine Identität, Position oder Sensorinformationen offenbaren müsste.

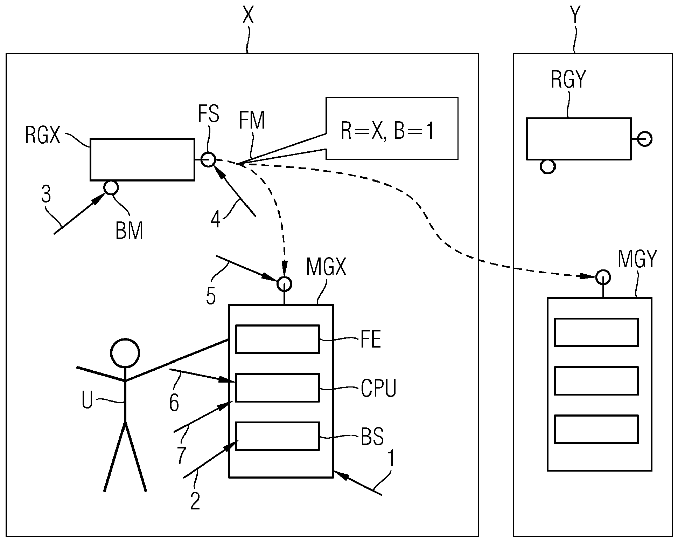

Nachfolgend wird die Erfindung anhand eines in der Zeichnung dargestellten Ausführungsbeispiels näher erläutert.

Zur erfindungsgemäßen Anordnung gehört ein in einem Raum X eines Gebäudes installiertes Raumgerät RGX mit einem optischem Bewegungsmelder BM und einem Funksender FS sowie ein zu einem Benutzer U gehöriges mobiles Gerät MGX mit einem inertialen Bewegungssensor BS, einem Funkempfänger FE und einer Recheneinheit CPU.

In der Zeichnung ist der Benutzer U mit dem zugehörigen mobilen Gerät ebenfalls im Raum X dargestellt. In einem weiteren Raum Y des Gebäudes sind ein weiteres installiertes Raumgerät RGY sowie ein weiteres mobiles Gerät MGY beispielhaft dargestellt.

Die Erfindung zeichnet sich insbesondere dadurch aus, dass die Identität des mobilen Gerätes MGX geschützt ist.
Ein unbeteiligtes mobiles Gerät, bspw. das weitere mobile Gerät MGY, das die Funkmeldung FM, etwa aus dem weiteren Raum Y heraus, mithört, kann nicht auf die Identität des mobilen Gerätes MGX schließen.

Es werden keine weiteren Server o.ä. zur Positionierung benötigt, zu denen das mobile Gerät seine Identität, Position oder Sensorinformationen offenbaren müsste.

Ferner sind in der Zeichnung in Pfeilform wesentlichen Schritte des erfindungsgemäßen Verfahrens an den betreffenden Stellen der Vorrichtung angedeutet.

Hierbei wird in einem ersten Schritt 1 das mobile Gerät durch den Benutzer U innerhalb des Raumes X bewegt, worauf der Bewegungssensor BS des mobilen Geräts MGX in einem Schritt 2 eine Bewegung des Geräts MGX und der Bewegungsmelder BM des Raumgeräts RGX in einem Schritt 3 eine Bewegung im Raum X erkennen.

Das Raumgerät RGX sendet nun in einem vierten Schritt eine Funkmeldung FM mit seiner eigenen Position, insbesondere der Bezeichnung des Raumes X (R=X), und mit einem Hinweis dass es eine Bewegung erkannt wurde (B=1).

Das mobile Gerät MGX empfängt in einem fünften Schritt 5 die Funknachricht FM und misst dabei deren Signalstärke.
Die Recheneinheit CPU des mobilen Geräts MGX erkennt nun in einem sechsten Schritt 6 zum einen mit einem statistischen Verfahren, dass die Signalstärke des soeben empfangenen Funksignals hoch ist, und zum anderen, dass die durch den Bewegungsmelder BM des Raumgeräts RGX festgestellte Bewegung mit der durch den Bewegungssensors BS des mobilen Geräts MGX festgestellten Bewegung zeitlich korreliert sind.

Daraufhin folgert die Recheneinheit CPU des mobilen Geräts MGX in einem siebten Schritt 7, dass die eben in Raum X gemeldete Bewegung wahrscheinlich seine eigene ist, und dass das mobile Gerät MGX im Raum X und nicht bspw. im Nachbarraum Y ist.

Das Raumgerät RGX kann optional als WiFi-Access Point mit integriertem Bewegungsmelder ausgestaltet sein, wobei der WiFi-Access-Point die Funknachricht FM als Teil seiner normalen Access-Point-Funkbarken sendet.

Ferner kann das Raumgerät RGX optional als einfacher Bewegungsmelder ausgestaltet sein, der drahtgebunden mit einem anderen WiFi-Access-Point kommuniziert.

Optional können die Funknachrichten FM vom Raumgerät RGX immer nach Erkennen einer Bewegung versendet werden oder aber periodisch gesendet, bspw. etwa alle 2 Sekunden, gesendet werden, wobei im letzteren Fall vorteilhafter Weise zum genauen zeitlichen Korrelieren der Bewegungen ein Zeitstempel der höchsten Bewegung oder ein Zeitprofil der Bewegungen, bspw. über die letzten 2 Sekunden, geschickt wird.

Optional können die Funknachrichten FM auch verschlüsselt werden, z.B. über ein WiFi-Netz, gesendet, derart, dass sie nur von mobilen Geräten mit einem für das Gebäude festgelegten Funkschlüssel entschlüsselt werden können. Dadurch wird verhindert, dass ein Angreifer, der mit einem nicht zum Gebäude gehörenden mobilen Gerät außerhalb des Gebäudes steht, mitlauscht bzw. feststellen kann, dass im Raum X eine Bewegung stattfand.

Das Verfahren ermöglicht eine kostengünstige raumgenaue Lokalisierung ohne Beeinträchtigung der Privatsphäre des Nutzers. Die Erfindung hat den großen Vorteil, dass sie sich mit heute Verfügbaren mobilen Geräten, z.B. Smartphone mit Intertialsensor und WiFi, umsetzen lässt. Auch das Raumgerät ist mit heute verfügbaren Sensoren preisgünstig realisierbar, z. B als in Form einer Kombination eines Passiv-Infraroten Bewegungsmelders und eines WiFi Access Points.

## Patentansprüche

1. Verfahren zur Ortsbestimmung eines mobilen Gerätes innerhalb eines Gebäudes, wobei ein jeweiliges mobiles Gerät (MGX) durch den Benutzer (U) innerhalb des Raumes (X) bewegt wird,
- wobei ein Bewegungssensor (BS) des jeweiligen mobilen Geräts (MGX) eine Bewegung des Geräts (MGX) und ein Bewegungsmelder (BM) eines in mindestens einem Raum (X) eines Gebäudes installierten jeweiligen Raumgeräts (RGX) eine Bewegung in dem mindestens einen Raum (X) erkennen,
**dadurch gekennzeichnet**
- **dass** das jeweilige Raumgerät (RGX) eine Funkmeldung (FM) mit seiner eigenen Position sendet,
- **dass** das jeweilige mobile Gerät (MGX) die Funkmeldung (FM) empfängt und dabei deren Signalstärke misst,
- **dass** das jeweilige mobile Gerät (MGX) zum einen mit einem statistischen Verfahren erkennt, wenn die Signalstärke des soeben empfangenen Funkmeldung hoch ist, und zum anderen, wenn die durch den Bewegungsmelder (BM) des jeweiligen Raumgeräts (RGX) festgestellte Bewegung mit der durch den Bewegungssensors (BS) des jeweiligen mobilen Geräts (MGX) festgestellten Bewegung zeitlich korreliert sind, und daraus folgert, dass die eben in dem mindestens einen Raum (X) gemeldete Bewegung wahrscheinlich seine eigene ist und dass sich das jeweilige mobile Gerät (MGX) in dem mindestens einen Raum (X) und in der Nähe des jeweiligen Raumgeräts (RGX) bzw. dessen Position befindet.

2. Verfahren nach Anspruch 1, bei dem die Funkmeldung (FM) mit seiner eigenen Position eine Bezeichnung des mindestens einen Raumes (X) und einen Hinweis dass es eine Bewegung erkannt wurde enthält.

3. Verfahren nach Anspruch 1 oder 2,
bei dem die Funkmeldung (FM) von dem jeweiligen Raumgerät (RGX) immer nach Erkennen einer Bewegung versandt wird.

4. Verfahren nach Anspruch 1 oder 2,
bei dem die Funkmeldung (FM) von dem jeweiligen Raumgerät (RGX) periodisch gesendet wird, wobei ein Zeitstempel der größten Bewegung oder ein Zeitprofil der Bewegungen innerhalb der vergangenen Periode gesendet wird.

5. Verfahren nach einem der vorhergehenden Ansprüche,
bei dem die Funkmeldungen (FM) verschlüsselt gesendet werden, derart, dass sie nur von mobilen Geräten mit einem für das Gebäude festgelegten Funkschlüssel entschlüsselt werden können.

6. Vorrichtung zur Durchführung des Verfahren nach einem der vorhergehenden Ansprüche in Form eines Raumgeräts (RGX) mit einem optischen Bewegungsmelder (BM) und einem Funksender (FS), bei der eine Funkmeldung (FM) mit seiner eigenen Position sendbar ist.

7. Vorrichtung nach Anspruch 6,
bei der das Raumgerät (RGX) als WiFi-Access Point mit integriertem Bewegungsmelder ausgestaltet ist, wobei der WiFi-Access-Point die Funknachricht (FM) als Teil seiner normalen Access-Point-Funkbarken sendet.

8. Vorrichtung nach Anspruch 6,
bei der das Raumgerät (RGX) als einfacher Bewegungsmelder ausgestaltet ist, der drahtgebunden mit einem anderen WiFi-Access-Point kommuniziert.

9. Vorrichtung zur Durchführung des Verfahren nach einem der vorhergehenden Ansprüche in Form eines mobilen Geräts (MGX) mit einem inertialen Bewegungssensor (BS), einen Funkempfänger (FE) und eine Recheneinheit (CPU),
- bei der eine Funkmeldung (FM) eines Raumgeräts empfangbar und dabei deren Signalstärke messbar ist und
- bei der mit Hilfe eines statistischen Verfahrens eine hohe Signalstärke der soeben empfangenen Funkmeldung feststellbar, eine zeitliche Korrelation zwischen der durch den Bewegungsmelder (BM) des jeweiligen Raumgeräts (RGX) festgestellten Bewegung und der durch den Bewegungssensors (BS) des jeweiligen mobilen Geräts (MGX) festgestellten Bewegung ermittelbar und daraus die eigene Position in der Nähe des jeweiligen Raumgeräts (RGX) erkennbar ist.

## Claims

1. Method for determining the location of a mobile device within a building, wherein a respective mobile device (MGX) is moved by the user (U) within the room (X),
- wherein a motion sensor (BS) of the respective mobile device (MGX) identifies a movement by the device (MGX) and a motion detector (BM) of a respective room device (RGX) installed in at least one room (X) of a building identifies characterized a movement in the at least one room (X),
- in that the respective room device (RGX) sends a radio message (FM) containing its own position,
- in that the respective mobile device (MGX) receives the radio message (FM) and in so doing measures the signal strength thereof,
- in that the respective mobile device (MGX) uses a statistical method to identify firstly when the signal strength of the radio message just received is high and secondly when the movement established by the motion detector (BM) of the respective room device (RGX) and the movement established by the motion sensor (BS) of the respective mobile device (MGX) have a temporal correlation, and concludes therefrom that the movement just reported in the at least one room (X) is probably its own and that the respective mobile device (MGX) is situated in the at least one room (X) and in proximity to the respective room device (RGX) or the position thereof.

2. Method according to Claim 1, in which the radio message (FM) containing its own position contains a label for the at least one room (X) and an indication that a movement has been identified.

3. Method according to Claim 1 or 2, in which the radio message (FM) is sent by the respective room device (RGX) whenever a movement has been identified.

4. Method according to Claim 1 or 2,
in which the radio message (FM) is sent periodically by the respective room device (RGX), wherein a time stamp for the largest movement or a time profile for the movements within the past period is sent.

5. Method according to one of the preceding claims,
in which the radio messages (FM) are sent in encrypted form such that they can be decrypted only by mobile devices having a radio key that is stipulated for the building.

6. Apparatus for performing the method according to one of the preceding claims in the form of a room device (RGX) having an optical motion detector (BM) and a radio transmitter (FS), in which a radio message (FM) containing its own position can be sent.

7. Apparatus according to Claim 6,
in which the room device (RGX) is embodied as a Wi-Fi access point having an integrated motion detector, wherein the Wi-Fi access point sends the radio message (FM) as part of its normal access point radio beacons.

8. Apparatus according to Claim 6,
in which the room device (RGX) is embodied as a simple motion detector that communicates with another Wi-Fi access point by wire.

9. Apparatus for performing the method according to one of the preceding claims in the form of a mobile device (MGX) having an inertial motion sensor (BS), a radio receiver (FE) and a computation unit (CPU),
- in which a radio message (FM) from a room device can be received and in so doing the signal strength thereof can be measured and
- in which a statistical method can be used to establish a high signal strength for the radio message just received, to ascertain a temporal correlation between the movement established by the motion detector (BM) of the respective room device (RGX) and the movement established by the motion sensor (BS) of the respective mobile device (MGX) and to identify therefrom its own position in proximity to the respective room device (RGX).

## Revendications

1. Procédé de localisation d'un appareil mobile à l'intérieur d'un bâtiment, dans lequel un appareil mobile (MGX) respectif est déplacé par l'utilisateur (U) à l'intérieur de la pièce (X),
dans lequel un capteur de mouvement (BS) de l'appareil mobile (MGX) respectif détecte un mouvement de l'appareil (MGX) et un indicateur de mouvement (BM) d'un appareil d'intérieur (RGX) respectif installé dans au moins une pièce (X) d'un bâtiment détecte un mouvement dans l'au moins une pièce (X), **caractérisé en ce que**
- l'appareil d'intérieur (RGX) respectif envoie un message radio (FM) avec sa propre position,
- que l'appareil mobile (MGX) respectif reçoit le message radio (FM) et mesure ainsi sa puissance de signal,
- que l'appareil mobile (MGX) respectif, d'une part, détecte par un procédé statistique, si la puissance de signal du message radio qui vient d'être reçu est élevée, et d'autre part si le mouvement décelé par l'indicateur de mouvement (BM) de l'appareil d'intérieur (RGX) respectif est corrélé temporellement avec le mouvement décelé par le capteur de mouvement (BS) de l'appareil mobile (MGX) respectif, et en déduit que le mouvement indiqué à l'instant dans l'au moins une pièce (X) est vraisemblablement le sien, et que l'appareil mobile (MGX) respectif se trouve dans l'au moins une pièce (X) et à proximité de l'appareil d'intérieur (RGX) respectif, respectivement de sa position.

2. Procédé selon la revendication 1, dans lequel le message radio (FM) avec sa propre position contient une désignation de l'au moins une pièce (X) et une indication qu'un mouvement a été détecté.

3. Procédé selon la revendication 1 ou 2, dans lequel le message radio (FM) est envoyé par l'appareil d'intérieur (RGX) respectif toujours après détection d'un mouvement.

4. Procédé selon la revendication 1 ou 2, dans lequel le message radio (FM) est envoyé périodiquement par l'appareil d'intérieur (RGX) respectif, dans lequel un pointeur temporel du plus grand mouvement ou un profil temporel des mouvements est envoyé à l'intérieur de la période écoulée.

5. Procédé selon l'une des revendications précédentes, dans lequel les messages radio (FM) sont envoyés chiffrés, de telle sorte qu'ils ne peuvent être déchiffrés que par des appareils mobiles avec un code radio déterminé pour le bâtiment.

6. Dispositif d'exécution du procédé selon l'une des revendications précédentes sous forme d'un appareil d'intérieur (RGX) avec un indicateur de mouvement (BM) optique et un émetteur radio (FS), dans lequel un message radio (FM) peut être envoyé avec sa propre position.

7. Dispositif selon la revendication 6, dans lequel l'appareil d'intérieur (RGX) est conçu en tant que point d'accès WiFi à indicateur de mouvement intégré, dans lequel le point d'accès WiFi envoie le message radio (FM) en tant que partie de ses radiobalises de point d'accès normales.

8. Dispositif selon la revendication 6, dans lequel l'appareil d'intérieur (RGX) est conçu en tant qu'indicateur de mouvement simple qui communique par fil avec un autre point d'accès WiFi.

9. Dispositif d'exécution du procédé selon l'une des revendications précédentes sous forme d'un appareil mobile (MGX) avec un capteur de mouvement (BS) inertiel, un récepteur radio (FE) et une unité de calcul (CPU),
- dans lequel un message radio (FM) d'un appareil d'intérieur peut être reçu et dont la puissance de signal peut être alors mesurée et
- dans lequel à l'aide d'un procédé statistique, une puissance de signal élevée du message radio qui vient d'être reçu peut être décelée,
une corrélation temporelle entre le mouvement décelé par l'indicateur de mouvement (BM) de l'appareil d'intérieur (RGX) respectif et le mouvement décelé par le capteur de mouvement (BS) de l'appareil mobile (MGX) respectif peut être calculée et la propre position à proximité de l'appareil d'intérieur (RGX) respectif peut en être détectée.
